# EUROPEAN PATENT SPECIFICATION

(11) **EP 4 087 342 B1**
(45) Date of publication and mention of the grant of the patent: **18.06.2025**
(21) Application number: 20909716.1
(22) Date of filing: 28.12.2020
(51) Int. Cl.: H04W 72/542, H04W 72/1268, H04W 72/21, H04W 72/51, H04W 74/00

(54) **TRANSMISSION METHOD AND DEVICE**
ÜBERTRAGUNGSVERFAHREN UND -VORRICHTUNG
PROCÉDÉ ET DISPOSITIF DE TRANSMISSION

(30) Priority: 03.01.2020 CN 202010006114
(43) Date of publication of application: 09.11.2022
(73) Proprietor: Datang Mobile Communications Equipment Co., Ltd., Beijing 100085 (CN)
(72) Inventor: MIAO, Jinhua, Beijing 100083 (CN); CHEN, Li, Beijing 100083 (CN); BERTRAND, Pierre, Beijing 100083 (CN)
(74) Representative: Studio Torta S.p.A.
(86) International application number: PCT/CN2020/139948
(87) International publication number: WO 2021/136146

(56) References cited:
- EP-A1- 3 370 364
- EP-A1- 3 379 881
- EP-A1- 3 379 883
- EP-A1- 3 528 572
- WO-A1-2019/233398
- CN-A- 102 970 761
- CN-A- 107 371 260
- US-A1- 2018 124 648

## Description

### TECHNICAL FIELD

The present disclosure relates to the field of communications technologies, in particular, relates to a transmission method and a transmission device.

### BACKGROUND

In the related art, a network configures semi-permanent scheduling (also referred to as Semi-Persistent Scheduling (SPS) and configured grant transmission in the following manners.

First manner: Modulation and Coding Scheme (MCS), a frequency-domain start position of a Radio Bear (RB), and a RB size are configured by Radio Resource Control (RRC);

Second manner: the MCS, the frequency-domain start position of the RB and the RB size are configured by Downlink Control Information (DCI) of a physical layer.

When a network side finds, through other manners such as reported Channel State Information (CSI), that a current MCS cannot meet transmission requirement of a User Equipment (UE), and if the network side does not make modification to the MCS and the MCS is too small, resources will be wasted, and if the MCS is too large, a packet loss rate will be high.

In the related art, the network side modifies the MCS and the RB size through RRC reconfiguration, or through deactivating and reactivating resources.

In the related art, resources of each semi-static scheduling/configured grant are not updated after activation or RRC configuration, for example, the UE needs to transmit an IP-based voice transmission (Voice over Internet Protocol, VoIP) service, the network side determines resources (for example, MCS, Resource Block Group (RBG) size, and the like) for transmitting the VoIP service for the UE according to a channel state in which the UE initially establishes a VoIP bearer. However, as the UE moves, for example, the UE moves from the center of a cell to an edge of the cell, the network side can only re-configure the MCS or the RBG size of the resources by reactivation or even by RRC reconfiguration.

On the other hand, if a service period of the UE changes, but a packet size is not changed, the base station also needs to perform resource reconfiguration by activation/deactivation, or even RRC reconfiguration.

This seriously affects continuity of a service, especially for delay sensitive services such as Ultra Reliable Low Latency Communications (URLLC) services, processes of activation/deactivation and reconfiguration can severely impact a business experience. European patent application No. EP3379881A1 discloses a scheduling resource configuration method and apparatus, user equipment, and a base station.

A European patent application No. EP3528572A1 discloses a grant-free transmission method, a terminal, and a network device in the communications field.

A European patent application No. EP3370364A1 discloses a service transmission method and apparatus.

A European patent application No. EP3379883A1 discloses a method for transmitting a service, a mobile station (MS) and network equipment.

### SUMMARY

An object of the embodiments of the present disclosure is to provide a transmission method and a transmission device, to solve the problem of a delay being increased as a result of resources being reconfigured or reactivated by the network side. The invention is set out in the appended set of claims.

In the embodiments of the present disclosure, a network device configures a plurality of pieces of resource information the configured grant scheduling or the random access, and if a channel quality changes/a service state changes, the network device may select at least one of the plurality of pieces of resource information to perform data transmission, so as to avoid the problem of increasing a time delay due to reconfiguring or reactivating a resource by the network side.

### BRIEF DESCRIPTION OF THE DRAWINGS

Various other advantages and benefits will become apparent to those of ordinary skills in the art upon reading the following detailed description of optional embodiments. The drawings are for the purpose of illustrating optional embodiments only and are not intended to be limiting of the present disclosure. The same reference numerals are used to designate the same components throughout the drawings. In the drawings:
Fig. 1 is an architecture diagram of a radio communication system according to the present disclosure;
Fig. 2 is a first flowchart of a transmission method according to the present disclosure;
Fig. 3 is a second flowchart of a transmission method according to the present disclosure;
Fig. 4 is a third flowchart of a transmission method according to the present disclosure;
Fig. 5 is a fourth flowchart of a transmission method according to the present disclosure;
Fig. 6 is a fifth flowchart of a transmission method according to the present disclosure;
Fig. 7 is a sixth flowchart of a transmission method according to the present disclosure;
Fig. 8 is a seventh flowchart of a transmission method according to the present disclosure;
Fig. 9 is an eighth flowchart of a transmission method according to the present disclosure;
Fig. 10 is a ninth flowchart of a transmission method according to the present disclosure;
Fig. 11 is a tenth flowchart of a transmission method according to the present disclosure;
Fig. 12 is an eleventh flowchart of a transmission method according to the present disclosure;
Fig. 13 is a twelfth flowchart of a transmission method according to the present disclosure;
Fig. 14 is a first structural schematic diagram of a network device according to an embodiment of the present disclosure;
Fig. 15 is a second structural schematic diagram of a network device according to the present disclosure;
Fig. 16 is a first structural schematic diagram of a terminal according to an embodiment of the present disclosure;
Fig. 17 is a second structural schematic diagram of a terminal according to the present disclosure;
Fig. 18 is a structural schematic diagram of a communication device according to the present disclosure.

### DETAILED DESCRIPTION

In order to facilitate understanding of the embodiments of the present disclosure, SPS/configured grant scheduling is first described below:
unlike allocating radio resources to a UE once per slot/Transmission Time Interval (TTI) during dynamic scheduling (designated by a Physical Downlink Control Channel (PDCCH)), SPS/configured grant scheduling allows semi-statically configuring radio resources and periodically allocating the resources to a particular UE. Briefly, a network side notifies the UE that a certain resource can be used periodically, and optionally, a location of the periodic resource can be notified through a Radio Resource Control (RRC) signaling. Optionally, the network side may also notify the UE of a frequency-domain location, start time, end time, Modulation and Coding Scheme (MCS), and other information of the used resources, which will not be repeated here.

In this way, the network reduces a PDCCH notification overhead by periodically allocating resources.

The SPS/configured grant scheduling is suitable for periodic services, such as VoIP-based services or services such as some URLLC services having a periodic control signaling.

SPS transmission is a downlink scheduling. The network side activates SPS resources through a physical-layer signaling during a RRC allocation period, and indicates time-frequency-domain resource locations and other information.

The configured grant is an uplink scheduling. The configured grant has two types, i.e., Type 1 and Type 2.

In Type1, the RRC allocates periodic resources, and after configuration by the RRC, the resources are in an active state, that is, the UE can use the resources to send uplink data after receiving a RRC configuration message.

In Type 2, the RRC allocates periodic resources, but an initial state is an inactive state, and the network side needs to activate the resources through a physical-layer signaling. After data transmission is completed, the network side deactivates the resource through Downlink Control Information (DCI). Similarly, resource information of part of the configured grant may also be modified through a physical-layer signaling, for example, the time-frequency-domain location information of the resources may be modified.

The technical solutions in the embodiments of the present disclosure will be clearly and completely described below with reference to the drawings in the embodiments of the present disclosure. Obviously, the described embodiments are part of the embodiments of the present disclosure, not all of the embodiments.

Such terms as "including" and any variations thereof are intended to cover non-exclusive inclusions, for example, a process, a method, a system, a product or a device including a series of steps or units needs not be limited to those steps or units that are clearly listed, but may include other steps or units not explicitly listed or inherent to these processes, methods, products, or devices. In addition, use of "and/or" in the specification and claims means at least one of connected objects, such as A and/or B indicates that a single A exists, a single B exists, and both A and B exist.

In the embodiments of the present disclosure, such words as "exemplary" or "such as" are used to indicate examples, illustration, or explanation. Any embodiment or any design described as "exemplary" or "illustrative" in the embodiments of the present disclosure should not be construed as being more preferred or advantageous than other embodiments or designs. Rather, use of the words "exemplary" or "such as" is intended to present relevant concepts in a specific manner.

Embodiments of the present disclosure are described below with reference to the accompanying drawings. The transmission method and the transmission device provided in the embodiments of the present disclosure may be applied to a radio communication system. The radio communication system may be a fifth-generation (5G) mobile communication system, or an Evolved Long Term Evolution (eLTE) system, or a subsequent evolved communication system.

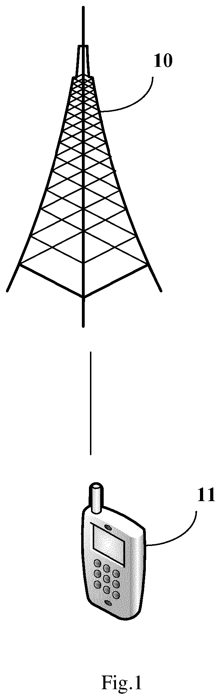

Fig. 1 is a schematic diagram of an architecture of a radio communication system provided in the present disclosure. As shown in Fig. 1, the radio communication system may include a network device 10 and a terminal (e.g., User Equipment, UE), for example, the terminal being referred to as UE 11, the UE 11 may communicate (transmit signaling or transmit data) with the network device 10. In practical application, connection between the above devices may be a wireless connection. In order to conveniently and intuitively show connection relationship between the devices, a solid line is used in Fig. 1 for the connection relationship.

It should be noted that the communication system may include a plurality of UEs 11, and the network device 10 may communicate with the plurality of UEs 11.

The network device 10 provided in the embodiment of the present disclosure may be a base station, and the base station may be a commonly used base station or an evolved node base station (eNB), or may also be a network device (for example, a next generation node base station (gNB) or a transmission and reception point (TRP) or the like in a 5G system.

The user equipment provided in the embodiments of the present disclosure may be a mobile phone, a tablet computer, a notebook computer, a Ultra-Mobile Personal Computer (UMPC), a netbook or a Personal Digital Assistant (PDA), etc.

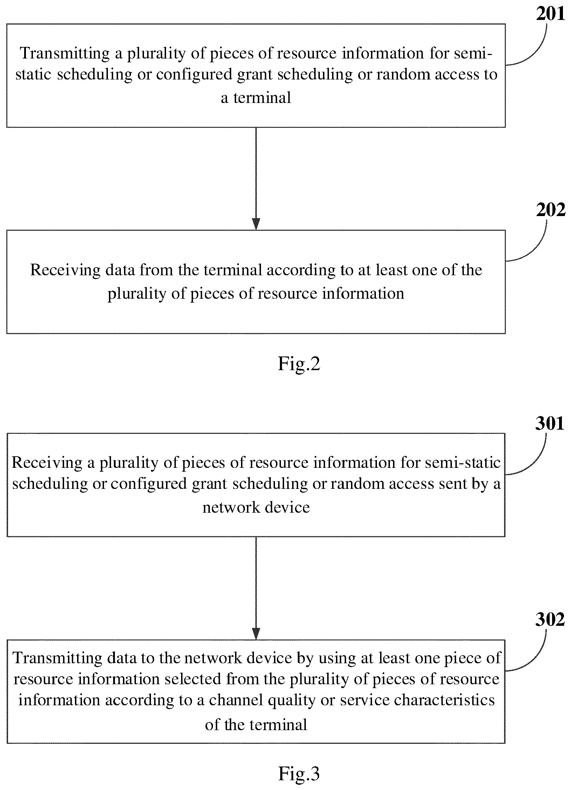

Referring to Fig. 2, the present disclosure provides a transmission method, wherein an entity for performing the method may be a network device. The method includes step 201 and step 202.

Step 201: transmitting a plurality of pieces of resource information for semi-static scheduling or configured grant scheduling or random access to a terminal.

Optionally, the plurality of pieces of resource information may include one or more of the following: (1) MCS information; (2) a physical resource block (PRB) start position; (3) a time-domain start position; (4) a Resource Block Group (RBG) size; (5) a Physical Uplink Shared Channel (PUSCH) length; (6) a period of configuring resources.

Optionally, the plurality of pieces of resource information is configured for the same semi-static scheduling or the same configured grant scheduling or the same random access.

It can be understood that the plurality of pieces of resource information may correspond to a plurality of transmission modes, each of the plurality of transmission modes corresponds to one set of resource information, and each set of resource information includes multiple pieces of resource information.

For example, the network side configures three sets of resource information for the semi-static scheduling or the configured grant scheduling or the random access of the UE.

The first set of resource information includes MCS 1, a start position 1 of a network-configured resource, PRB1, a PUSCH length 1, and a period 1.

The second set of resource information includes MCS2, a start position 2 of a network-configured resource, PRB2, a PUSCH length 2, and a period 2.

The third set of resource information includes MCS3, a start position 3 of a network-configured resource, PRB3, a PUSCH length 3, and a period 3.

Optionally, the above three sets of resource information may be configured for the same semi-static scheduling or the same configured grant scheduling or the same random access.

Step 202: receiving data from the terminal according to at least one of the plurality of pieces of resource information.

In some embodiments, in step 202, indication information sent by the terminal is received, the indication information indicates at least one piece of resource information used by the terminal to transmit data currently or to transmit data next time; at least one piece of resource information is selected according to the indication information, data currently transmitted by the terminal or data transmitted next time by the terminal is received by using the at least one piece of resource information.

It can be understood that the indication information may be configured by a network device, for example, the method may further include, configuring corresponding indication information according to at least one of the plurality of pieces of resource information, and sending the indication information to the terminal.

For example, indication information 1 configured by the network device corresponds to the MCS 1, the start position 1 of the network-configured resource, the PRB 1, the PUSCH length 1, and the period 1.

The indication information 2 configured by the network device corresponds to the MCS 2, the start position 2 of the network-configured resource, the PRB 2, the PUSCH length 2, and the period 2.

The indication information 3 configured by the network device corresponds to the MCS 3, the start position 3 of the network-configured resource, the PRB 3, the PUSCH length 3, and the period 3.

In some embodiments, the indication information may include at least one of following: (1) a Demodulation Reference Signal (DM-RS); (2) a Medium Access Control Control Element (MAC CE); (3) Uplink Control Information (UCI); (4) a preamble sequence (Preamble).

For example, the DM-RS or the Preamble is used to indicate at least one piece of resource information used by the terminal to transmit data currently; for another example, the MAC CE or UCI is used to indicate at least one piece of resource information used by the terminal to transmit data next time, that is, the DM-RS or the Preamble is used for current transmission, and the MAC CE or the UCI is used for the next transmission.

In other embodiments, in step 202, channel quality information sent by the terminal is received, and at least one piece of resource information is selected according to the channel quality information, for receiving data from the terminal.

The channel quality information may be Channel Quality Indication (CQI) information, Reference Signal Receiving Power (RSRP), Signal to Interference plus Noise Ratio (SINR), Reference Signal Received Quality (RSRQ) or Received Signal Strength Indication (RSSI) information.

It is understood that mapping between the channel quality information and the resource information may be configured by the network device, for example, the method may further include: configuring mapping relationship between the channel quality information and the at least one piece of resource information.

For example, channel quality information 1 configured by the network device corresponds to the MCS 1, the start position 1 of the network-configured resource, the PRB 1, the PUSCH length 1, and the period 1.

Channel quality information 2 configured by the network device corresponds to the MCS 2, the start position 2 of the network-configured resource, the PRB 2, the PUSCH length 2, and the period 2.

Channel quality information 3 configured by the network device corresponds to the MCS 3, the start position 3 of the network-configured resource, the PRB 3, the PUSCH length 3, and the period 3.

In an embodiment of the present disclosure, the terminal described in step 201 and step 202 may be in an RRC connected state or an RRC inactive state.

In an embodiment of the present disclosure, a network device configures a plurality of pieces of resource information for the semi-static scheduling or the configured grant scheduling or the random access, and if a channel quality changes/a service state changes, the network device may select at least one of the plurality of pieces of resource information to receive the data sent by the terminal, so as to avoid the problem of increasing a time delay due to reconfiguring or reactivating a resource by the network side.

Referring to Fig. 3, the present disclosure also provides a transmission method, an entity of performing the method may be a terminal, and the method includes step 301 and step 302.

Step 301: receiving a plurality of pieces of resource information for semi-static scheduling or configured grant scheduling or random access transmitted by a network device.

Optionally, the plurality of pieces of resource information may include one or more of the following: (1) MCS information; (2) a physical resource block (PRB) start position; (3) a time-domain start position; (4) a Resource Block Group (RBG) size; (5) a Physical Uplink Shared Channel (PUSCH) length; (6) a period of configuring resources.

Optionally, the plurality of pieces of resource information is configured for the same semi-static scheduling or the same configured grant scheduling or the same random access.

Step 302: transmitting data to the network device by using at least one piece of resource information selected from the plurality of pieces of resource information according to a channel quality or service characteristics of the terminal.

Further, the network device may configure mapping relationship between channel quality information or service characteristics and different pieces of resource information, so that the terminal may, according to the mapping relationship and the current channel quality or service characteristics, determine corresponding resource information.

For example, channel quality information 1 or service characteristics 1 configured by the network device corresponds to the MCS 1, the start position 1 of the network-configured resource, the PRB 1, the PUSCH length 1, and the period 1.

Channel quality information 2 or service characteristics 2 configured by the network device corresponds to the MCS 2, the start position 2 of the network-configured resource, the PRB 2, the PUSCH length 2, and the period 2.

Channel quality information 3 or service characteristics 3 configured by the network device corresponds to the MCS 3, the start position 3 of the network-configured resource, the PRB 3, the PUSCH length 3, and the period 3.

Illustratively, the MCS corresponds to the MCS 1 when SINR is in [range 1], the MCS corresponds to the MCS 2 when SINR is in [range 2], and the MCS corresponds to the MCS 3 when the SINR is in [range 3].

The channel quality information may be CQI information, RSRP, SINR, RSRQ, or RSSI information.

The service characteristics may be information such as period information of a service, a service interval, or delay requirement of a service.

Further, after the at least one piece of resource information is selected, the method may further include: sending indication information to the network device, the indication information indicates at least one piece of resource information used by the terminal to transmit data currently or to transmit data next time.

It can be understood that the indication information may be configured by a network device, and the indication information may be received by the terminal from the network device, for example, the method may further include: receiving the indication information configured by the network device, the indication information corresponds to at least one piece of resource information of the plurality of pieces of resource information.

In some embodiments, the indication information may include at least one of following: (1) DM-RS; (2) MAC CE; (3) UCI, (4) Preamble.

For example, the DM-RS or the Preamble is used to indicate at least one piece of resource information used by the terminal to transmit data currently; for another example, the MAC CE or UCI is used to indicate at least one piece of resource information used by the terminal to transmit data next time.

In an embodiment of the present disclosure, the terminal may be in an RRC connected state or an RRC inactive state.

In the embodiment of the present disclosure, a network device configures a plurality of pieces of resource information for the semi-static scheduling or the configured grant scheduling or the random access, and if a channel quality changes/a service state changes, the terminal may select at least one of the plurality of pieces of resource information to send data to the network device, so as to avoid the problem of increasing a time delay due to reconfiguring or reactivating a resource by the network side.

Transmission modes in the present disclosure are described below in connection with Embodiment 1, Embodiment 2, Embodiment 3, Embodiment 4, and Embodiment 5 which are not fully encompasseed by the claims.

Embodiment 1: the network side configures a plurality of pieces of resource information for the same semi-persistent scheduling/ the same configured grant, and the plurality of pieces of resource information may be MCS information, a PRB start position, or a time-domain start position, or a RBG size, a PUSCH length, or the period of configuring resources, and the UE selects a corresponding MCS and a corresponding RBG size to transmit data according to the channel quality.

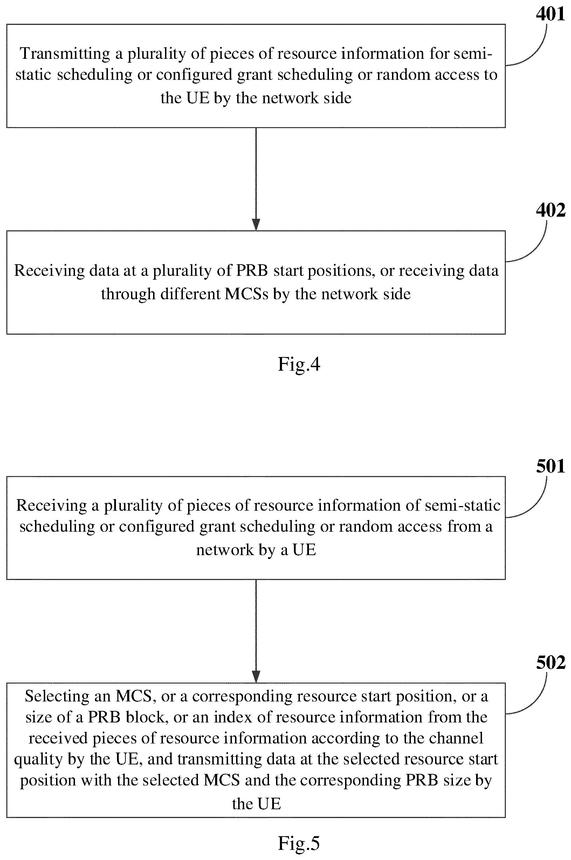

Referring to Fig. 4, the transmission method at the network side in the Embodiment 1 includes the following steps 401-402.

Step 401: sending a plurality of pieces of resource information for semi-static scheduling or configured grant scheduling or random access to the UE by the network side.

The pieces of resource information represent information related to resources available by the semi-static scheduling or the configured grant scheduling or the random access, the pieces of resource information include one or more of the following parameters: (1) the MCS information; (2) the PRB start location; (3) the time-domain start location; (4) the RBG size; (5) the PUSCH length; (6) the period of configuring resources.

For example, the network side configures three sets of resource information for the semi-static scheduling or the configured grant scheduling or the random access of the UE:
The first set of resource information includes: MCS 1, a start position 1 of a network-configured resource, PRB 1, a PUSCH length 1, and a period 1.
The second set of resource information includes: MCS 2, a start position 2 of a network-configured resource, PRB 2, a PUSCH length 2, and a period 2.
The third set of resource information includes: MCS 3, a start position 3 of a network-configured resource, PRB 3, a PUSCH length 3, and a period 3.

Optionally, the plurality of pieces of resource information may be configured for one set of semi-static scheduling or configured grant scheduling or random access.

Step 402: receiving data at a plurality of PRB start positions, or receiving data through different MCSs by the network side.

For example, data of a UE is received at the start position 2, and the network side demodulates the data of the UE through the MCS2, and delivers the demodulated data to an upper layer.

Referring to Fig. 5, a transmission method at a terminal side in the Embodiment 1 includes the following steps 501-502.

Step 501: receiving a plurality of pieces of resource information of semi-static scheduling or configured grant scheduling or random access from a network by a UE. Optionally, the pieces of resource information represent information related to resources available by the semi-static scheduling or the configured grant scheduling or the random access, the pieces of resource information include one or more of the following parameters: (1) the MCS information; (2) the PRB start location; (3) the time-domain start location; (4) the RBG size; (5) the PUSCH length; (6) the period of configuring resources.

For example, the network side configures three MCSs for the semi-static scheduling or the configured grant scheduling or the random access of the UE.

For a MCS 1, a start position 1 of a network-configured resource, PRB 1, a PUSCH length 1.

For a MCS 2, a start position 2 of a network-configured resource, PRB 2, a PUSCH length 2.

For a MCS 3, a start position 3 of a network-configured resource, PRB 3, a PUSCH length 3.

Optionally, the plurality of pieces of resource information may be configured for one set of semi-static scheduling or configured grant scheduling or random access.

Step 502: selecting an MCS, or a corresponding resource start position, or a size of a PRB block, or an index of resource information from the pieces of resource information according to the channel quality by the UE, and transmitting data at the selected resource start position with the selected MCS and the corresponding PRB size by the UE.

Embodiment 2: the network side configures a plurality of pieces of resource information for the same semi-persistent scheduling/ the same configured grant, and the plurality of pieces of resource information may be MCS information, a PRB start position, or a time-domain start position, or a RBG size, a PUSCH length, or the period of configuring resources, and the UE selects corresponding period information to transmit data according to the service characteristics.

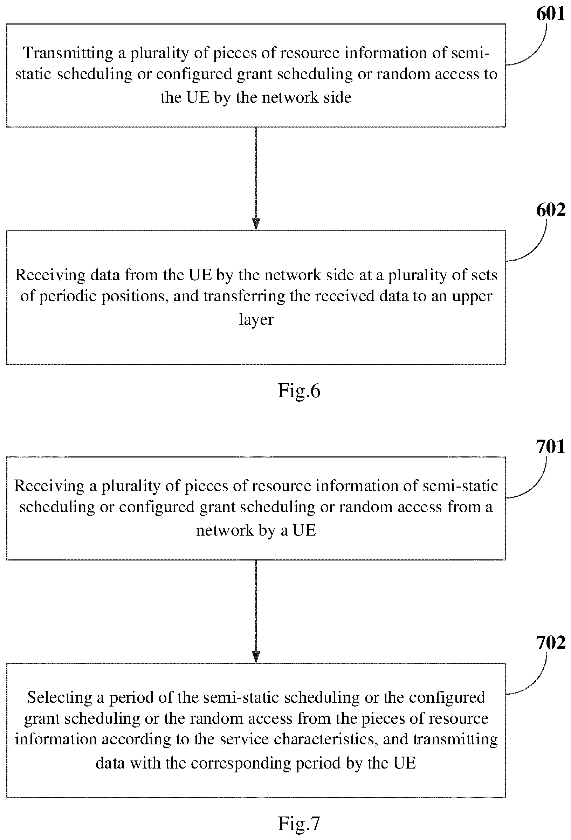

Referring to Fig. 6, the transmission method at the network side in the Embodiment 2 includes the following steps 601-602.

Step 601: sending a plurality of pieces of resource information of semi-static scheduling or configured grant scheduling or random access to the UE by the network side.

The pieces of resource information represent information related to resources available by the semi-static scheduling or the configured grant scheduling or the random access, the pieces of resource information include one or more of the following parameters: (1) the MCS information; (2) the PRB start location; (3) the time-domain start location; (4) the RBG size; (5) the PUSCH length; (6) the period of configuring resources.

For example, the network side configures three sets of resource information for the semi-static scheduling or the configured grant scheduling or the random access of the UE:
The first set of resource information includes: MCS 1, a start position 1 of a network-configured resource, PRB 1, a PUSCH length 1, and a period 1.
The second set of resource information includes: MCS 2, a start position 2 of a network-configured resource, PRB 2, a PUSCH length 2, and a period 2.
The third set of resource information includes: MCS 3, a start position 3 of a network-configured resource, PRB 3, a PUSCH length 3, and a period 3.

Optionally, the above three sets of resource information may be configured for one set of semi-static scheduling or configured grant scheduling or random access.

Step 602: receiving data sent by the UE by the network side at a plurality of sets of periodic positions, and transferring the received data to an upper layer.

Referring to Fig. 7, the transmission method at the terminal side in the Embodiment 2 includes the following steps 701-702.

Step 701: receiving a plurality of pieces of resource information of semi-static scheduling or configured grant scheduling or random access from a network by a UE. Optionally, the pieces of resource information represent information related to resources available by the semi-static scheduling or the configured grant scheduling or the random access, the pieces of resource information include one or more of the following parameters: (1) the MCS information; (2) the PRB start location; (3) the time-domain start location; (4) the RBG size; (5) the PUSCH length; (6) the period of configuring resources.

For example, the network side configures three MCSs for the semi-static scheduling or the configured grant scheduling or the random access of the UE.

For a MCS 1, a start position 1 of a network-configured resource, PRB 1, a PUSCH length 1.

For a MCS 2, a start position 2 of a network-configured resource, PRB 2, a PUSCH length 2.

For a MCS 3, a start position 3 of a network-configured resource, PRB 3, a PUSCH length 3.

Optionally, the plurality of pieces of resource information may be configured for one set of semi-static scheduling or configured grant scheduling or random access.

Step 702: selecting a period of the semi-static scheduling or the configured grant scheduling or the random access from the pieces of resource information according to the service characteristics by the UE, and transmitting data with the corresponding period by the UE.

For example, according to step 701, the network side allocates 3 periods to the UE in configuration 1 of the semi-static scheduling or the configured grant scheduling or the random access, the UE selects a period 1 according to the service characteristics, and as a service is transmitted, a period length of the service becomes period 2, and the UE selects, according to the service characteristics, the period 2 to transmit data.

Embodiment 3: the network side configures different DM-RSs for different characteristics, such as different MCS information, or different RBG sizes, or different PUSCH lengths, or the different periods of configuring resources; the UE sends the DM-RS to the network side according to different characteristics, such as different MCS information, or different RBG sizes, or different PUSCH lengths, or the different periods of configuring resources.

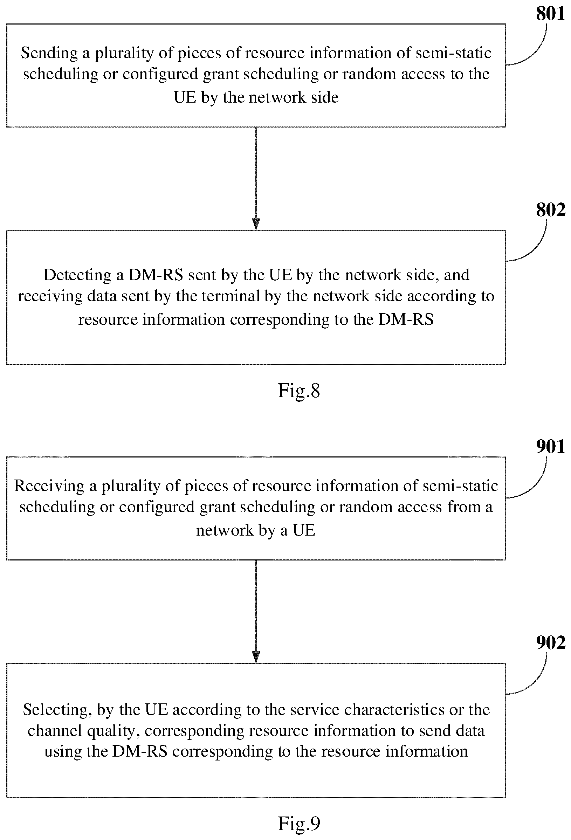

Referring to Fig. 8, the transmission method at the network side in the Embodiment 3 includes the following steps 801-802.

Step 801: sending a plurality of pieces of resource information of semi-static scheduling or configured grant scheduling or random access to the UE by the network side.

Optionally, the pieces of resource information represent information related to resources available by the semi-static scheduling or the configured grant scheduling or the random access, the pieces of resource information include one or more of the following parameters: (1) the MCS information; (2) the PRB start location; (3) the time-domain start location; (4) the RBG size; (5) the PUSCH length; (6) the period of configuring resources.

For example, the network side configures three sets of resource information for the semi-static scheduling or the configured grant scheduling or the random access of the UE:
The first set of resource information includes: MCS 1, a start position 1 of a network-configured resource, RGB size 1, a PUSCH length 1, and a period 1.
The second set of resource information includes: MCS 2, a start position 2 of a network-configured resource, RGB size 2, a PUSCH length 2, and a period 2.
The third set of resource information includes: MCS 3, a start position 3 of a network-configured resource, RGB size 3, a PUSCH length 3, and a period 3.

Optionally, the sets of resource information may be configured for one set of semi-static scheduling or configured grant scheduling or random access.

Optionally, the network side configures one DM-RS for each set of resource information, for example, DM-RS 1 is configured for the first set, DM-RS 2 is configured for the second set, and DM-RS 3 is configured for the third set.

Step 802: detecting a DM-RS sent by the UE by the network side, and receiving data sent by the terminal by the network side according to resource information corresponding to the DM-RS.

Optionally, different DM-RSs are used to indicate different pieces of resource information.

For example, when the network side receives the DM-RS1 and determines that the UE selects the first set of resource information to transmit data, the network side will receive data according to the first set of resource information, such as the MCS 1, the start position 1, and the RBG size 1.

Referring to Fig. 9, the transmission method at the terminal side in the Embodiment 3 includes the following steps 901-902.

Step 901: receiving a plurality of pieces of resource information of semi-static scheduling or configured grant scheduling or random access from a network by the UE. Optionally, the pieces of resource information represent information related to resources available by the semi-static scheduling or the configured grant scheduling or the random access, the pieces of resource information include one or more of the following parameters: (1) the MCS information; (2) the PRB start location; (3) the time-domain start location; (4) the RBG size; (5) the PUSCH length; (6) the period of configuring resources.

For example, the network side configures three sets of resource information for the semi-static scheduling or the configured grant scheduling or the random access of the UE.

The first set of resource information includes: MCS 1, a start position 1 of a network-configured resource, PRB 1, a PUSCH length 1, and a period 1.

The second set of resource information includes: MCS 2, a start position 2 of a network-configured resource, PRB 2, a PUSCH length 2, and a period 2.

The third set of resource information includes: MCS 3, a start position 3 of a network-configured resource, PRB 3, a PUSCH length 3, and a period 3.

Optionally, the plurality of pieces of resource information may be configured for one set of semi-static scheduling or configured grant scheduling or random access.

Optionally, the network side configures one DM-RS for each set of resource information, for example, DM-RS 1 is configured for the first set, DM-RS 2 is configured for the second set, and DM-RS 3 is configured for the third set.

Step 902: selecting, by the UE according to the service characteristics or the channel quality, corresponding resource information to send data using the DM-RS corresponding to the resource information.

For example, if the UE selects the period 1 according to period characteristics of the service, then the UE selects the first set of resource information, and DM-RS for the first set of resource information is the DM-RS 1, so the UE sends the DM-RS 1, and uses the first set of resource information to transmit data, for example, the MCS 1, the start position 1, and the PRB 1 are used to receive the transmitted data.

Embodiment 4: the network side configures different DM-RSs for different characteristics, such as different MCS information, or different RBG sizes, or different PUSCH lengths, or the different periods of configuring resources. The UE sends a MAC CE or UCI or Preamble to the network side according to different characteristics, such as different MCS information, or different RBG sizes, or different PUSCH lengths, or the different periods of configuring resources.

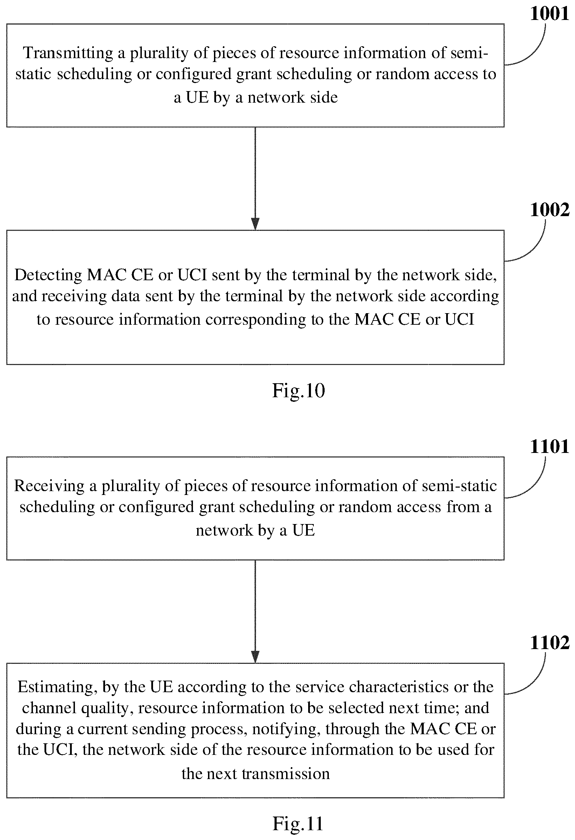

Referring to Fig. 10, the transmission method at the network side in the Embodiment 4 includes the following steps 1001-1002.

Step 1001: sending a plurality of pieces of resource information of semi-static scheduling or configured grant scheduling or random access to the UE by the network side.

Optionally, the pieces of resource information represent information related to resources available by the semi-static scheduling or the configured grant scheduling or the random access, the pieces of resource information include one or more of the following parameters: (1) the MCS information; (2) the PRB start location; (3) the time-domain start location; (4) the RBG size; (5) the PUSCH length; (6) the period of configuring resources.

For example, the network side configures three sets of resource information for the semi-static scheduling or the configured grant scheduling or the random access of the UE.

The first set of resource information includes: MCS 1, a start position 1 of a network-configured resource, PRB 1, a PUSCH length 1, and a period 1.

The second set of resource information includes: MCS 2, a start position 2 of a network-configured resource, PRB 2, a PUSCH length 2, and a period 2.

The third set of resource information includes: MCS 3, a start position 3 of a network-configured resource, PRB 3, a PUSCH length 3, and a period 3.

Optionally, the sets of resource information may be configured for one set of semi-static scheduling or configured grant scheduling or random access.

Step 1002: detecting the MAC CE or UCI sent by the UE by the network side, and receiving data sent by the terminal by the network side according to resource information corresponding to the MAC CE or UCI.

The MAC CE or UCI is used to indicate which resource is used by the UE to transmit data next time. For example, the MAC CE or UCI indicates that the MCS to be used next time is MCS 2, and then the network side uses the MCS 2 to perform demodulation when receiving data next time; or, the MAC CE or UCI indicates that a period of semi-static configuration to be used next time is period 3, then when the network side receives data of the next semi-static scheduling or configured grant scheduling or random access, reception will be performed according to period 3.

Referring to Fig. 11, the transmission method at the terminal side in the Embodiment 4 includes the following steps 1101-1102.

Step 1101: receiving a plurality of pieces of resource information of semi-static scheduling or configured grant scheduling or random access from the network by the UE.

Optionally, the pieces of resource information represent information related to resources available by the semi-static scheduling or the configured grant scheduling or the random access, the pieces of resource information include one or more of the following parameters: (1) the MCS information; (2) the PRB start location; (3) the time-domain start location; (4) the RBG size; (5) the PUSCH length; (6) the period of configuring resources.

For example, the network side configures three sets of resource information for the semi-static scheduling or the configured grant scheduling or the random access of the UE.

The first set of resource information includes: MCS 1, a start position 1 of a network-configured resource, PRB 1, a PUSCH length 1, and a period 1.

The second set of resource information includes: MCS 2, a start position 2 of a network-configured resource, PRB 2, a PUSCH length 2, and a period 2.

The third set of resource information includes: MCS 3, a start position 3 of a network-configured resource, PRB 3, a PUSCH length 3, and a period 3.

Optionally, the plurality of pieces of resource information may be configured for one set of semi-static scheduling or configured grant scheduling or random access.

Step 1102: estimating, by the UE according to the service characteristics or the channel quality, resource information to be selected next time; and during a current sending process, notifying, through the MAC CE or the UCI, the network side of the resource information to be used for the next transmission.

The MAC CE or UCI is used to indicate which resource is used by the UE to transmit UL data next time. For example, the MAC CE or UCI indicates that the MCS to be used next time is MCS 2, and then the UE will use the resource information of the semi-static scheduling or the configured grant scheduling or the random access to transmit data next time, and perform modulation using the MCS 2 when transmitting the data; or, the MAC CE or UCI indicates that a period of semi-static configuration to be used next time is period 3, then when the UE transmits data on a resource of the next semi-static scheduling or the next configured grant scheduling or the next random access, transmission will be performed according to period 3.

### Embodiment 5.

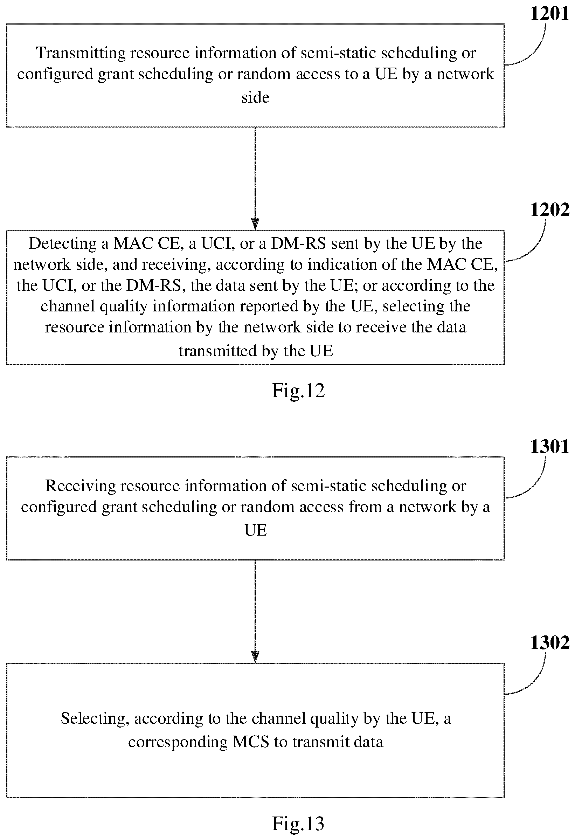

Referring to Fig. 12, the transmission method at the network side in Embodiment 5 includes the following steps 1201-1202.

Step 1201: transmitting resource information of semi-static scheduling or configured grant scheduling or random access to the UE by the network side.

Optionally, the resource information represent information related to resources available by the semi-static scheduling or the configured grant scheduling or the random access, the resource information includes one or more of the following parameters: (1) the MCS information; (2) the PRB start location; (3) the time-domain start location; (4) the RBG size; (5) the PUSCH length; (6) the period of configuring resources.

For example, the network side configures three sets of resource information for the semi-static scheduling or the configured grant scheduling or the random access of the UE:
The first set of resource information includes: MCS 1, a start position 1 of a network-configured resource, PRB 1, a PUSCH length 1, and a period 1.
The second set of resource information includes: MCS 2, a start position 2 of a network-configured resource, PRB 2, a PUSCH length 2, and a period 2.
The third set of resource information includes: MCS 3, a start position 3 of a network-configured resource, PRB 3, a PUSCH length 3, and a period 3.

Optionally, the sets of resource information may be configured for one set of semi-static scheduling or configured grant scheduling or random access.

The resource information includes mapping relationship between channel quality information and different parameters. For example, when a Signal to Interference plus Noise Ratio (SINR) is in [range 1], the MCS corresponds to MCS 1; when the SINR is in [range 2], the MCS corresponds to MCS 2; and when the SINR is in [range 3], the MCS corresponds to MCS 3.

Step 1202: detecting the MAC CE, the UCI, the Preamble or the DM-RS sent by the UE by the network side, and receiving, according to indication of the MAC CE, the UCI, the Preamble or the DM-RS, the data sent by the UE; or according to the channel quality information reported by the UE, selecting the resource information by the network side to receive the data transmitted by the UE.

Optionally, the MAC CE or the UCI is used to indicate which resource is used by the UE to transmit data next time. For example, the MAC CE or the UCI indicates that the MCS to be used next time is MCS 2, and then the network side uses the MCS 2 to perform demodulation when receiving data next time; or, the MAC CE or the UCI indicates that a period of semi-static configuration to be used next time is period 3, then when the network side receives data of the next semi-static scheduling or configured grant scheduling or random access, reception will be performed according to period 3. It is understood that a detailed description for the DM-RS is the same as that of Embodiment 3, and is not described herein.

For example, the network side determines that the SINR is in the [range 1] according to a CSI SINR reported by the UE, and the network side selects the MCS 1 to receive the data sent by the UE.

Referring to Fig. 13, the transmission method at the terminal side in Embodiment 5 includes the following steps 1301-1302.

Step 1301: receiving resource information of semi-static scheduling or configured grant scheduling or random access from the network by the UE.

Optionally, the resource information includes a resource information list available by the semi-static scheduling or the configured grant scheduling or the random access, the resource information list includes one or more of the following: (1) the MCS information; (2) the PRB start location; (3) the time-domain start location; (4) the RBG size; (5) the PUSCH length; (6) the period of configuring resources.

For example, the network side configures three sets of resource information for the semi-static scheduling or the configured grant scheduling or the random access of the UE, which are following respectively: MCS 1, a start position 1 of a network-configured resource, PRB 1, a PUSCH length 1, and a period 1; MCS 2, a start position 2 of a network-configured resource, PRB 2, a PUSCH length 2, and a period 2; MCS 3, a start position 3 of a network-configured resource, PRB 3, a PUSCH length 3, and a period 3.

Optionally, the sets of resource information are configured for one set of semi-static scheduling or configured grant scheduling or random access.

The resource information includes mapping relationship between channel quality information and different parameters. For example, when a SINR is in [range 1], the MCS corresponds to MCS 1; when the SINR is in [range 2], the MCS corresponds to MCS 2; and when the SINR is in [range 3], the MCS corresponds to MCS 3.

Step 1302: selecting, according to the channel quality by the UE, a corresponding MCS to transmit data.

For example, the SINR is in [range 1], the UE selects MCS 1, and transmits data on a resource of semi-static scheduling or configured grant scheduling or random access.

It can be understood that in the above Embodiments 1 to 5, the terminal may be in the RRC connected state or the RRC inactive state.

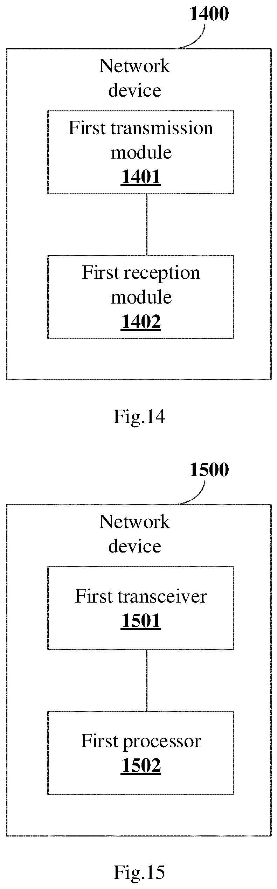

Referring to Fig. 14, an embodiment of the present disclosure also provides a network device 1400, which includes a first transmission module 1401 and a first reception module 1402.

The first transmission module 1401 is configured to transmit a plurality of pieces of resource information for semi-static scheduling or configured grant scheduling or random access to a terminal.

The first reception module 1402 is configured to receive data from the terminal according to at least one of the plurality of pieces of resource information.

In some embodiments, the plurality of pieces of resource information is configured for the same semi-static scheduling or configured grant scheduling or random access.

In some embodiments, the first reception module 1402 is further configured to: receive indication information sent by the terminal, the indication information indicating at least one piece of resource information used by the terminal to transmit data currently or to transmit data next time; select at least one piece of resource information according to the indication information; receive, by using the at least one piece of resource information, data currently transmitted by the terminal or data transmitted next time by the terminal.

In some embodiments, the network device 1400 further includes a first configuration module configured to configure corresponding indication information according to at least one of the plurality of pieces of resource information. The first transmission module 1401 is further configured to send the indication information to the terminal.

In some embodiments, the indication information includes at least one of the following: DM-RS, MAC CE, UCI, Preamble.

In some embodiments, the DM-RS or the Preamble is used to indicate at least one piece of resource information used by the terminal to transmit data currently; or, the MAC CE or UCI is used to indicate at least one piece of resource information used by the terminal to transmit data next time.

In some embodiments, the first reception module 1402 is further configured to: receive channel quality information sent by the terminal; select at least one piece of resource information according to the channel quality information; and receive data from the terminal using the at least one piece of resource information.

In some embodiments, the network device 1400 further includes a second configuration module configured to configure mapping relationship between the channel quality information and the at least one piece of resource information.

In some embodiments, the resource information includes one or more of the following: MCS information; a PRB start position; a time-domain start position; a RBG size; a PUSCH length; and a period of configuring resources.

In some embodiments, the terminal may be in an RRC connected state or an RRC inactive state.

The network device provided in the embodiment of the present disclosure may execute the method in the embodiment shown in Fig. 2, and implementation principles and technical effects in the embodiments are similar, and detailed description is not repeated here in this embodiment.

Fig. 15 shows an embodiment of the present disclosure which is not covered by the claims and which provides a network device 1500 including a first transceiver 1501 and a first processor 1502, the first transceiver 1501 is configured to transmit a plurality of pieces of resource information for semi-static scheduling or configured grant scheduling or random access to a terminal, and the first transceiver 1501 is further configured to transmit a plurality of pieces of resource information for semi-static scheduling or configured grant scheduling or random access to a terminal, the first transceiver 1501 is further configured to receive data from the terminal according to at least one of the plurality of pieces of resource information.

In some embodiments, the plurality of pieces of resource information is configured for the same semi-static scheduling or configured grant scheduling or random access.

In some embodiments, the first transceiver 1501 is further configured to receive indication information sent by the terminal, the indication information indicating at least one piece of resource information used by the terminal to transmit data currently or to transmit data next time; select at least one piece of resource information according to the indication information; receive, by using the at least one piece of resource information, data currently transmitted by the terminal or data transmitted next time by the terminal.

In some embodiments, the first processor 1502 is configured to configure corresponding indication information according to at least one of the plurality of pieces of resource information, and the first transceiver 1501 is further configured to send the indication information to the terminal.

In some embodiments, the indication information includes at least one of the following: DM-RS, MAC CE, UCI, Preamble.

In some embodiments, the DM-RS or the Preamble is used to indicate at least one piece of resource information used by the terminal to transmit data currently; or, the MAC CE or UCI is used to indicate at least one piece of resource information used by the terminal to transmit data next time.

In some embodiments, the first transceiver 1501 is further configured to receive channel quality information sent by the terminal; select at least one piece of resource information according to the channel quality information; and receive data from the terminal.

In some embodiments, the first processor 1502 is further configured to configure mapping relationship between the channel quality information and the at least one piece of resource information.

In some embodiments, the resource information includes one or more of the following: MCS information; a PRB start position; a time-domain start position; a RBG size; a PUSCH length; and a period of configuring resources.

In some embodiments, the terminal may be in an RRC connected state or an RRC inactive state.

The network device provided in the embodiment of the present disclosure may execute the method in the embodiment shown in Fig. 2, and implementation principles and technical effects in the embodiments are similar, and detailed description is not repeated here in this embodiment.

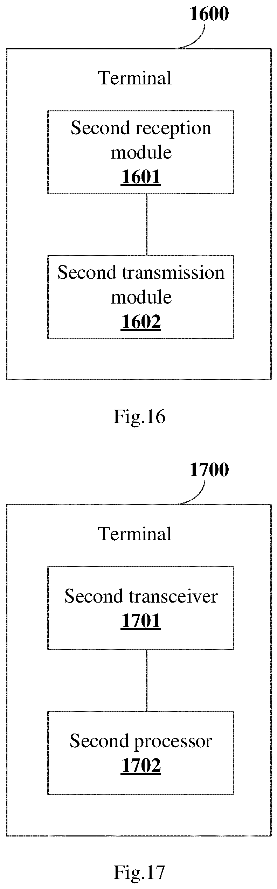

Referring to Fig. 16, an embodiment of the present disclosure also provides a terminal 1600, which includes a second reception module 1601 and a second transmission module 1602.

The second reception module 1601 is configured to receive a plurality of pieces of resource information of semi-static scheduling or configured grant scheduling or random access sent by a network device.

The second transmission module 1602 is configured to select at least one piece of resource information from the plurality of pieces of resource information according to a channel quality or a service characteristic of the terminal, and send data to the network device.

In some embodiments, the plurality of pieces of resource information is configured for the same semi-static scheduling or configured grant scheduling or random access.

In some embodiments, the terminal 1600 further includes a third transmission module configured to send indication information to the network device, the indication information indicating at least one piece of resource information used by the terminal to transmit data currently or to transmit data next time.

In some embodiments, the terminal 1600 further includes a third reception module configured to receive indication information configured by the network device, wherein the indication information corresponds to at least one of the plurality of pieces of resource information.

In some embodiments, the indication information includes at least one of the following: DM-RS, MAC CE, UCI, Preamble.

In some embodiments, the DM-RS or the Preamble is used to indicate at least one piece of resource information used by the terminal to transmit data currently; or, the MAC CE or UCI is used to indicate at least one piece of resource information used by the terminal to transmit data next time.

In some embodiments, the resource information includes one or more of the following: MCS information; a PRB start position; a time-domain start position; a RBG size; a PUSCH length; and a period of configuring resources.

In some embodiments, the terminal may be in an RRC connected state or an RRC inactive state.

The terminal provided in the embodiment of the present disclosure may execute the method in the embodiment shown in Fig. 3, and implementation principles and technical effects in the embodiments are similar, and detailed description is not repeated here in this embodiment.

Fig. 17 shows an embodiment of the present disclosure which is not covered by the claims and which further provides a terminal 1700 including a second transceiver 1701 and a second processor 1702.

The second transceiver 1701 is configured to select at least one piece of resource information from the plurality of pieces of resource information according to a channel quality or a service characteristic of the terminal, and send data to the network device. In some embodiments, the plurality of pieces of resource information is configured for the same semi-static scheduling or configured grant scheduling or random access.

In some embodiments, that second transceiver 1701 is further configured to send indication information to the network device, the indication information indicating at least one piece of resource information used by the terminal to transmit data currently or to transmit data next time.

In some embodiments, the second transceiver 1701 is further configured to receive indication information configured by the network device, wherein the indication information corresponds to at least one of the plurality of pieces of resource information.

In some embodiments, the indication information includes at least one of the following: DM-RS, MAC CE, UCI, Preamble.

In some embodiments, the DM-RS or the Preamble is used to indicate at least one piece of resource information used by the terminal to transmit data currently; or, the MAC CE or UCI is used to indicate at least one piece of resource information used by the terminal to transmit data next time.

In some embodiments, the resource information includes one or more of the following: MCS information; a PRB start position; a time-domain start position; a RBG size; a PUSCH length; and a period of configuring resources.

In some embodiments, the terminal may be in an RRC connected state or an RRC inactive state.

The terminal provided in the embodiment of the present disclosure may execute the method in the embodiment shown in Fig. 3, and implementation principles and technical effects in the embodiments are similar, and detailed description is not repeated here in this embodiment.

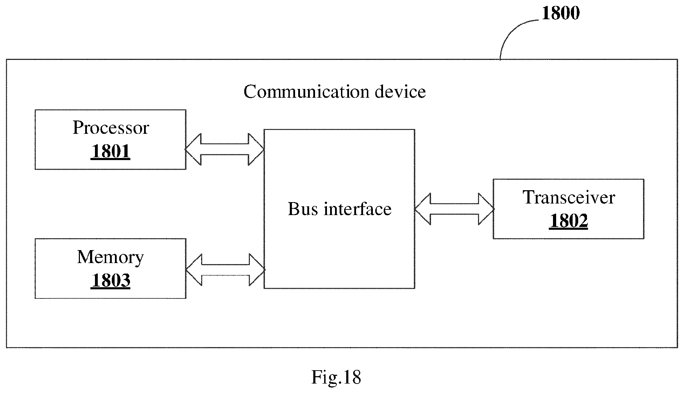

Referring to Fig. 18, Fig. 18 is a block diagram of a communication device applied in embodiments of the present disclosure. As shown in Fig. 18, which shows an embodiment not covered by the claims, the communication device 1800 includes a processor 1801, a transceiver 1802, a memory 1803, and a bus interface. The processor 1801 may be responsible for managing a bus architecture and general processing. The memory 1803 may store data used by the processor 1801 in performing operations.

In an embodiment of the present disclosure, the communication device 1800 also includes a program stored on the memory 1803 and executable by the processor 1801. When the program is executed by the processor 1801, the processor 1801 implements the steps in the method shown in Fig. 2 or Fig. 3 above.

In Fig. 18, the bus architecture may include any number of interconnected buses and bridges, specifically various circuits such as one or more processors represented by the processor 1801 and a memory represented by the memory 1803 are linked together. The bus architecture may also link together various other circuits such as peripheral devices, regulators, and power management circuits, all of which are well known in the art, and therefore, will not be further described in the embodiments of the present disclosure. A bus interface provides an interface. The transceiver 1802 may be a number of elements, including a transmitter and a receiver, for providing means for communicating with various other devices over a transmission medium.

The communication device provided by the embodiment of the present disclosure can execute the method in the embodiment shown in Fig. 2 or Fig. 3, and implementation principles and technical effects are similar, and detailed description is not repeated here. The steps of the method or algorithm described in connection with the present disclosure may be implemented in hardware, or may be implemented by a processor executing software instructions. The software instructions may consist of corresponding software modules, the software modules may be stored in a RAM, a flash memory, a ROM, an EPROM, an EEPROM, a register, a hard disk, a removable hard disk, a read only optical disk, or any other form of storage medium well known in the art. An exemplary storage medium is coupled to the processor such that the processor can read information from the storage medium and can write information to the storage medium. Of course, the storage medium may also be an integral part of the processor. The processor and the storage medium may be located in an Application Specific Integrated Circuit (ASIC). In addition, the ASIC may be located in a core network interface device. Of course, the processor and the storage medium may also exist as separate components in the core network interface device.

Those skilled in the art will appreciate that in one or more of the examples described above, functions described in the present disclosure may be implemented in hardware, software, firmware, or any combination thereof. When being implemented using software, these functions may be stored in a computer-readable medium or transmitted as one or more instructions or codes on the computer-readable medium. A computer-readable medium includes a computer storage medium and a communication medium, wherein the communication medium includes any medium that facilitates the transfer of a computer program from one place to another. The storage medium may be any available medium that can be accessed by a general purpose computer or a special purpose computer.

The above-described specific embodiments further describe the objects, technical solutions and advantageous effects of the present disclosure in detail. It should be understood that the above-described specific embodiments are only specific embodiments of the present disclosure.

Those skilled in the art will appreciate that the embodiments of the present disclosure may be provided as methods, systems, or computer program products. Thus, the embodiments of the present disclosure may take the form of an entirely hardware embodiment, an entirely software embodiment, or an embodiment combining software and hardware aspects. The embodiments of the present disclosure may employ forms of computer program products implemented on one or more computer usable storage media (including, being but not limited to, a disk storage, a CD-ROM, and an optical storage) having computer usable program codes contained therein.

The embodiments of the present disclosure are described with reference to flowcharts and/or block diagrams of methods, apparatus (systems), and computer program products according to the embodiments of the present disclosure. It should be understood that each of flows and/or blocks in the flowcharts and/or the block diagrams, and combinations of the flows and/or the blocks in the flowcharts and/or the block diagrams, may be implemented by computer program instructions. These computer program instructions may be provided to a processor of a general purpose computer, a special purpose computer, an embedded processor, or other programmable data processing device to produce a machine, so that a means for implementing functions specified in one or more flows of the flowcharts and/or one or more blocks of the block diagrams is generated by executing instructions by a processor of a computer or other programmable data processing devices.

These computer program instructions may also be stored in a computer-readable memory capable of directing a computer or other programmable data processing devices to operate in a particular manner, so that instructions stored in the computer-readable memory produce an article of manufacture including an instruction device, the instruction device implements a function specified in one or more flows of the flowcharts and/or one or more blocks of the block diagrams.

These computer program instructions may also be loaded onto a computer or other programmable data processing devices such that a series of operational steps are performed on the computer or other programmable devices to produce a computer-implemented process, and instructions executed on a computer or other programmable devices provide steps for implementing the functions specified in one or more flows of the flowcharts and/or one or more blocks of the block diagrams.

It should be noted that the above divisions to modules are only divisions in respect of logical functions, and the modules can be entirely or partially integrated into one physical entity in actual implementation, or can also be physically separated. In addition, all of the modules may be implemented in form of software invoked by a processing element, or all of the modules may be implemented in form of hardware; or, some of the modules may be implemented in form of software invoked by a processing element, some of the modules are implemented in form of hardware. For example, a determining module may be a separate processing element, or may be integrated in a chip of the device, or may also be stored in a memory of the device in form of program codes, functions of the above determining module is called and executed by a processing element of the above device. Implementation of the other modules is similar to the determining module. In addition, all or part of these modules may be integrated together or may be implemented independently. The processing element described herein may be an integrated circuit with a signal processing capability. In an implementation, the steps of the above methods or the above various modules may be performed by integrated logic circuits of hardware in a processor element or by instructions in form of software.

For example, each module, unit, sub-unit, or sub-module may be one or more integrated circuits configured to implement the above methods, such as one or more Application Specific Integrated Circuits (ASICs), or, one or more digital signal processors (DSPs), or one or more Field Programmable Gate Arrays (FPGAs), etc. In another example, when one of the above modules is implemented in the form of program codes invoked by a processing element, the processing element may be a general purpose processor, such as a Central Processing Unit (CPU) or other processors that can invoke program codes. As another example, these modules may be integrated together and implemented in the form of a system-on-a-chip (SOC).

Such terms as "first", "second", and the like in the specification and claims of the present disclosure are used to distinguish similar objects and need not be used to describe a particular order or a sequential order. It should be understood that the terms used in this way may be interchanged where appropriate so that the embodiments of the present disclosure described herein for example can be implemented in a sequence other than those illustrated or described herein. In addition, such terms as "including" and "having" and any variations thereof are intended to cover non-exclusive inclusions, for example, a process, a method, a system, a product or a device including a series of steps or units needs not be limited to those steps or units that are clearly listed, but may include other steps or units not explicitly listed or inherent to these processes, methods, products, or devices. In addition, use of "and/or" in the specification and claims means at least one of connected objects, such as A and/or B and/or C, including seven cases that a single A exists, a single B exists, a single C exists, A and B exist, B and C exist, A and C exist, and all of A, B and C exist. Similar, use of "at least one of A and B" in this specification and in the claims should be understood to mean "A alone, B alone, or both A and B."

## Claims

1. A transmission method performed by a network device, wherein the method comprises:
transmitting (201, 401, 601, 801, 1001, 1201) to a terminal a plurality of pieces of resource information for configured grant scheduling or random access;
receiving (202) data from the terminal according to at least one of the plurality of pieces of resource information, wherein the at least one of the plurality of pieces of resource information is selected by a terminal according to a channel quality or a service characteristic of the terminal for sending data to the network device, wherein the plurality of pieces of resource information is configured for a same configured grant scheduling or a same random access.

2. The method according to claim 1, wherein receiving (202) data from the terminal according to the at least one of the plurality of pieces of resource information comprises:
receiving indication information sent by the terminal, the indication information indicating at least one piece of resource information used by the terminal to transmit data currently or to transmit data next time;
selecting at least one piece of resource information according to the indication information; receiving, by using the at least one piece of resource information, data currently transmitted by the terminal or data transmitted next time by the terminal.

3. The method according to claim 2, further comprising:
configuring corresponding indication information according to at least one of the plurality of pieces of resource information;
sending the indication information to the terminal.

4. The method according to claim 1, wherein receiving (202) the data from the terminal according to the at least one of the plurality of pieces of resource information comprises:
receiving channel quality information sent by the terminal;
selecting at least one piece of resource information according to the channel quality information, and receiving data from the terminal using the at least one piece of resource information.

5. The method according to claim 4, further comprising:
configuring mapping relationship between the channel quality information and the at least one piece of resource information.

6. A transmission method performed by a terminal, wherein the method comprises:
receiving (301, 501, 701, 901, 1101, 1301) a plurality of pieces of resource information, transmitted by a network device, for configured grant scheduling or random access;
selecting (302) at least one piece of resource information from the plurality of pieces of resource information according to a channel quality or a service characteristic of the terminal for sending data to the network device, wherein the plurality of pieces of resource information is configured for a same configured grant scheduling or a same random access.

7. The method according to claim 6, wherein, after selecting (302) at least one piece of resource information from the plurality of pieces of resource information, the method further comprises:
sending indication information to the network device, the indication information indicating at least one piece of resource information used by the terminal to transmit data currently or to transmit data next time.

8. The method according to claim 7, further comprising:
receiving indication information configured by the network device, wherein the indication information corresponds to at least one of the plurality of pieces of resource information.

9. The method according to claim 7 or 8, wherein the indication information comprises at least one of following:
a Demodulation Reference Signal, DM-RS;
a Medium Access Control Control Element, MAC CE;
Uplink Control Information, UCI;
a preamble sequence, Preamble.

10. The method according to claim 9, wherein,
the DM-RS or the Preamble is configured to indicate at least one piece of resource information used by the terminal to transmit data currently; or,
the MAC CE or the UCI is configured to indicate at least one piece of resource information used by the terminal to transmit data next time.

11. The method according to any one of claims 6 to 10, wherein the resource information comprises one or more of following:
Modulation and Coding Scheme, MCS, information;
a Physical Resource Block, PRB, start position;
a time-domain start position;
a Resource Block Group, RBG, size;
a Physical Uplink Shared Channel, PUSCH, length;
a period of configuring resources.

12. A network device, wherein the network device comprises:
a first transmission module (1401), configured to transmit to a terminal a plurality of pieces of resource information for configured grant scheduling or random access;
a first reception module (1402), configured to receive data from the terminal according to at least one of the plurality of pieces of resource information, wherein the at least one of the plurality of pieces of resource information is selected by a terminal according to a channel quality or a service characteristic of the terminal for sending data to the network device,
the plurality of pieces of resource information is configured for a same configured grant scheduling or a same random access.

13. A terminal, wherein the terminal comprises:
a second reception module (1601), configured to receive a plurality of pieces of resource information, transmitted by a network device, for configured grant scheduling or random access;
a second transmission module (1602), configured to select at least one piece of resource information from the plurality of pieces of resource information according to a channel quality or a service characteristic of the terminal for sending data to the network device, wherein, the plurality of pieces of resource information is configured for a same configured grant scheduling or a same random access.

## Patentansprüche

1. Übertragungsverfahren, das durch eine Netzwerkvorrichtung durchgeführt wird, wobei das Verfahren umfasst:
Übertragen (201, 401, 601, 801, 1001, 1201) einer Vielzahl von Ressourceninformationen für eine konfigurierte Gewährungsplanung oder einen wahlfreien Zugriff an ein Endgerät;
Empfangen (202) von Daten von dem Endgerät gemäß mindestens einer der Vielzahl von Ressourceninformationen, wobei die mindestens eine der Vielzahl von Ressourceninformationen von einem Endgerät gemäß einer Kanalqualität oder einer Diensteigenschaft des Endgeräts zum Senden von Daten an die Netzwerkvorrichtung ausgewählt wird, wobei die Vielzahl von Ressourceninformationen für eine gleiche konfigurierte Gewährungsplanung oder einen gleichen wahlfreien Zugriff konfiguriert ist.

2. Verfahren nach Anspruch 1, wobei das Empfangen (202) von Daten von dem Endgerät nach mindestens einer der Vielzahl von Ressourceninformationen Folgendes umfasst:
Empfangen von Angabeinformationen, die von dem Endgerät gesendet werden, wobei die Angabeinformationen mindestens eine der Ressourceninformationen angeben, die von dem Endgerät verwendet wird, um aktuell oder beim nächsten Mal Daten zu übertragen;
Auswählen mindestens einer von Ressourceninformationen gemäß der Angabeinformation; Empfangen von Daten, die aktuell von dem Endgerät übertragen werden, oder von Daten, die beim nächsten Mal von dem Endgerät übertragen werden, unter Verwendung der mindestens einen Ressourceninformation.

3. Verfahren nach Anspruch 2, ferner umfassend:
Konfigurieren entsprechender Angabeinformationen gemäß mindestens einer der Vielzahl von Ressourceninformationen;
Senden der Angabeinformationen an das Endgerät.

4. Verfahren nach Anspruch 1, wobei das Empfangen (202) der Daten von dem Endgerät gemäß der mindestens einen der Vielzahl von Ressourceninformationen umfasst:
Empfangen von Kanalqualitätsinformationen, die von dem Endgerät gesendet wurden;
Auswählen von mindestens einer von Ressourceninformationen entsprechend der Kanalqualitätsinformationen und Empfangen von Daten von dem Endgerät unter Verwendung der mindestens einen von Ressourceninformationen.

5. Verfahren nach Anspruch 4, ferner umfassend:
Konfigurieren einer Zuordnungsbeziehung zwischen den Kanalqualitätsinformationen und der mindestens einen Ressourceninformation.

6. Übertragungsverfahren, das durch ein Endgerät durchgeführt wird, wobei das Verfahren umfasst:
Empfangen (301, 501, 701, 901, 1101, 1301) einer Vielzahl von Ressourceninformationen, die von einer Netzwerkvorrichtung übertragen werden, für eine konfigurierte Genehmigungsplanung oder einen wahlfreien Zugriff;
Auswählen (302) mindestens einer Ressourceninformation aus der Vielzahl von Ressourceninformationen entsprechend einer Kanalqualität oder einer Diensteigenschaft des Endgeräts zum Senden von Daten an die Netzwerkvorrichtung, wobei die Vielzahl von Ressourceninformationen für eine gleiche konfigurierte Gewährungsplanung oder einen gleichen wahlfreien Zugriff konfiguriert ist.

7. Verfahren nach Anspruch 6, wobei das Verfahren nach dem Auswählen (302) von mindestens einer Ressourceninformation aus der Vielzahl von Ressourceninformationen ferner umfasst:
Senden von Angabeinformationen an die Netzwerkvorrichtung, wobei die Angabeinformationen mindestens eine Ressourceninformation angeben, die von dem Endgerät verwendet wird, um aktuell oder beim nächsten Mal Daten zu übertragen.

8. Verfahren nach Anspruch 7, ferner umfassend:
Empfangen von Angabeinformationen, die von der Netzwerkvorrichtung konfiguriert wurden, wobei die Angabeinformationen mindestens einer der Vielzahl von Ressourceninformationen entsprechen.

9. Verfahren nach Anspruch 7 oder 8, wobei die Angabeinformationen mindestens eines der Folgenden umfassen:
ein Demodulationsreferenzsignal, DM-RS;
ein Medienzugriffskontrollelement, MAC-CE;
Uplink-Steuerinformationen, UCI;
eine Präambelsequenz, Präambel.

10. Verfahren nach Anspruch 9, wobei
das DM-RS oder die Präambel so konfiguriert ist, dass sie mindestens eine Ressourceninformation angibt, die von dem Endgerät aktuell zum Übertragen von Daten verwendet wird; oder
der MAC CE oder die UCI so konfiguriert ist, dass sie mindestens eine Ressourceninformation angibt, die das Endgerät bei der nächsten Datenübertragung verwendet.

11. Verfahren nach einem der Ansprüche 6 bis 10, wobei die Ressourceninformation eines oder mehrere der Folgenden umfasst:
Modulations- und Codierungsschemainformationen, MCS-Informationen;
eine Startposition eines physikalischen Ressourcenblocks, PRB;
eine Zeitbereichs-Startposition;
eine Größe der Ressourcenblockgruppe, RBG;
eine Länge des physikalischen gemeinsam genutzten Uplink-Kanals, PUSCH;
eine Zeitspanne für die Ressourcenkonfiguration.

12. Netzwerkvorrichtung, wobei die Netzwerkvorrichtung Folgendes umfasst:
ein erstes Übertragungsmodul (1401), das dazu konfiguriert ist, an ein Endgerät eine Vielzahl von Ressourceninformationen für eine konfigurierte Gewährungsplanung oder einen wahlfreien Zugriff zu übertragen;
ein erstes Empfangsmodul (1402), das dazu konfiguriert ist, Daten von dem Endgerät gemäß mindestens einer der Vielzahl von Ressourceninformationen zu empfangen, wobei die mindestens eine der Vielzahl von Ressourceninformationen von einem Endgerät gemäß einer Kanalqualität oder einer Diensteigenschaft des Endgeräts zum Senden von Daten an die Netzwerkvorrichtung ausgewählt wird,
die Vielzahl von Ressourceninformationen für eine gleiche konfigurierte Gewährungsplanung oder einen gleichen wahlfreien Zugriff konfiguriert ist.

13. Endgerät, wobei das Endgerät umfasst:
ein zweites Empfangsmodul (1601), das zum Empfangen einer Vielzahl von Ressourceninformationen konfiguriert ist, die von einer Netzwerkvorrichtung übertragen werden, für eine konfigurierte Genehmigungsplanung oder einen wahlfreien Zugriff;
und ein zweites Übertragungsmodul (1602), das so konfiguriert ist, dass es mindestens eine Ressourceninformation aus der Vielzahl von Ressourceninformationen gemäß einer Kanalqualität oder einer Diensteigenschaft des Endgeräts auswählt, um Daten an die Netzwerkvorrichtung zu senden, wobei die Vielzahl von Ressourceninformationen für eine gleiche konfigurierte Gewährungsplanung oder einen gleichen wahlfreien Zugriff konfiguriert ist.

## Revendications

1. Procédé de transmission réalisé par un dispositif de réseau, dans lequel le procédé comprend :
la transmission (201, 401, 601, 801, 1001, 1201) à un terminal d'une pluralité d'éléments d'informations de ressources en vue d'une planification d'autorisation configurée ou d'un accès aléatoire ;
la réception (202) de données à partir du terminal selon au moins l'un parmi la pluralité d'éléments d'informations de ressources, dans lequel l'au moins un parmi la pluralité d'éléments d'informations de ressources est sélectionné par un terminal selon une qualité de canal ou une caractéristique de service du terminal pour l'envoi de données au dispositif de réseau, dans lequel la pluralité d'éléments d'informations de ressources est configurée pour une même planification d'autorisation configurée ou un même accès aléatoire.

2. Procédé selon la revendication 1, dans lequel la réception (202) de données à partir du terminal selon l'au moins un parmi la pluralité d'éléments d'informations de ressources comprend :
la réception d'informations d'indication envoyées par le terminal, les informations d'indication indiquant au moins un élément d'informations de ressources utilisé par le terminal pour transmettre des données actuellement ou pour transmettre des données une prochaine fois ;
la sélection d'au moins un élément d'informations de ressources selon les informations d'indication ; la réception, en utilisant l'au moins un élément d'informations de ressources, des données actuellement transmises par le terminal ou des données transmises une prochaine fois par le terminal.

3. Procédé selon la revendication 2, comprenant en outre :
la configuration des informations d'indication correspondantes selon au moins l'un parmi la pluralité d'éléments d'informations de ressources ;
l'envoi des informations d'indication au terminal.

4. Procédé selon la revendication 1, dans lequel la réception (202) des données à partir du terminal selon l'au moins un parmi la pluralité d'éléments d'informations de ressources comprend :
la réception d'informations de qualité de canal envoyées par le terminal ;
la sélection d'au moins un élément d'informations de ressources selon les informations de qualité de canal, et la réception de données à partir du terminal à l'aide de l'au moins un élément d'informations de ressources.

5. Procédé selon la revendication 4, comprenant en outre :
la configuration d'une relation de mappage entre les informations de qualité de canal et l'au moins un élément d'informations de ressources.

6. Procédé de transmission réalisé par un terminal, dans lequel le procédé comprend :
la réception (301, 501, 701, 901, 1101, 1301) d'une pluralité d'éléments d'informations de ressources, transmise par un dispositif de réseau, en vue d'une planification d'autorisation configurée ou d'un accès aléatoire ;
la sélection (302) d'au moins un élément d'informations de ressources parmi la pluralité d'éléments d'informations de ressources selon une qualité de canal ou une caractéristique de service du terminal pour l'envoi de données au dispositif de réseau, dans lequel la pluralité d'éléments d'informations de ressources est configurée pour une même planification d'autorisation configurée ou un même accès aléatoire.

7. Procédé selon la revendication 6, dans lequel, après la sélection (302) d'au moins un élément d'informations de ressources parmi la pluralité d'éléments d'informations de ressources, le procédé comprend en outre :
l'envoi d'informations d'indication au dispositif de réseau, les informations d'indication indiquant au moins un élément d'informations de ressources utilisé par le terminal pour transmettre des données actuellement ou pour transmettre des données une prochaine fois.

8. Procédé selon la revendication 7, comprenant en outre :
la réception d'informations d'indication configurées par le dispositif de réseau, dans lequel les informations d'indication correspondent à au moins l'un parmi la pluralité d'élément d'informations de ressources.

9. Procédé selon la revendication 7 ou 8, dans lequel les informations d'indication comprennent au moins l'un parmi ce qui suit :
un signal de référence de démodulation, DM-RS ;
un élément de commande de commande d'accès au support, CE MAC ;
des informations de commande de liaison montante, UCI ;
une séquence de préambule, préambule.

10. Procédé selon la revendication 9, dans lequel,
le DM-RS ou le préambule est configuré pour indiquer au moins un élément d'informations de ressources utilisé par le terminal pour transmettre des données actuellement ; ou,
le CE MAC ou les UCI sont configurés pour indiquer au moins un élément d'informations de ressources utilisé par le terminal pour transmettre des données une prochaine fois.

11. Procédé selon l'une quelconque des revendications 6 à 10, dans lequel les informations de ressources comprennent un ou plusieurs parmi ce qui suit :
des informations de schéma de modulation et de codage, MCS, ;
une position de départ de bloc de ressources physiques, PRB ;
une position de départ de domaine temporel ;
une taille de groupe de blocs de ressources, RBG ;
une longueur de canal physique partagé de liaison montante, PUSCH ;
une période de ressources de configuration.

12. Dispositif de réseau, dans lequel le dispositif de réseau comprend :
un premier module de transmission (1401), configuré pour transmettre à un terminal une pluralité d'éléments d'informations de ressources en vue d'une planification d'autorisation configurée ou d'un accès aléatoire ;
un premier module de réception (1402), configuré pour recevoir des données à partir du terminal selon au moins l'un parmi la pluralité d'éléments d'informations de ressources, dans lequel l'au moins un parmi la pluralité d'éléments d'informations de ressources est sélectionné par un terminal selon une qualité de canal ou une caractéristique de service du terminal pour l'envoi de données au dispositif de réseau,
la pluralité d'éléments d'informations de ressources est configurée pour une même planification d'autorisation configurée ou un même accès aléatoire.

13. Terminal, dans lequel le terminal comprend :
un second module de réception (1601), configuré pour recevoir une pluralité d'éléments d'informations de ressources, transmise par un dispositif de réseau, en vue d'une planification d'autorisation configurée ou d'un accès aléatoire ;
un second module de transmission (1602), configuré pour sélectionner au moins un élément d'informations de ressources parmi la pluralité d'éléments d'informations de ressources selon une qualité de canal ou une caractéristique de service du terminal pour l'envoi de données au dispositif de réseau, dans lequel, la pluralité d'éléments d'informations de ressources est configurée pour une même planification d'autorisation configurée ou un même accès aléatoire.
